# EUROPÄISCHE PATENTSCHRIFT

(11) **EP 2 179 901 B1**
(45) Veröffentlichungstag und Bekanntmachung des Hinweises auf die Patenterteilung: **06.07.2016**
(21) Anmeldenummer: 09168374.8
(22) Anmeldetag: 21.08.2009
(51) Int. Cl.: B60S 1/40

(54) **Anschlussvorrichtung zum gelenkigen Verbinden eines Wischblatts in Flachbalkenbauweise mit einem Wischarm**
Connection device for articulated connection of a wiper blade in flat bar construction with a wiper arm
Dispositif de raccordement pour la liaison articulée d'une lame d'essuyage conçue sous la forme d'une barre plate avec un bras d'essuyage

(30) Priorität: 23.10.2008 DE 102008043121
(43) Veröffentlichungstag der Anmeldung: 28.04.2010
(73) Patentinhaber: Robert Bosch GmbH, 70442 Stuttgart (DE)
(72) Erfinder: Op't Roodt, Inigo, 3500 Hasselt (BE)

(56) Entgegenhaltungen:
- EP-A1- 1 681 216
- WO-A1-2007/049923
- DE-A1- 10 349 637
- DE-U1-202005 021 307
- FR-A1- 2 914 603
- US-A- 3 576 044

## Beschreibung

### Stand der Technik

Die Erfindung geht von einer Anschlussvorrichtung nach dem Oberbegriff des Anspruchs 1 aus.

Aus der DE 20 2005 021 307 U1 ist eine gattungsgemäße Anschlussvorrichtung bekannt. Sie umfasst ein Anschlusselement, das mit dem Wischblatt fest verbunden ist, und einen Adapter, der an einem hakenförmigen Ende eines Wischarms in gewohnter Weise angebracht ist. Der Adapter ist mit dem Anschlusselement über Lagerelemente in Form von Lagerzapfen am Anschlusselement und offenen Naben am Adapter gelenkig miteinander verbunden. Das Anschlusselement selbst umfasst zwei Teile, und zwar einen so genannten Verbindungsträger, der mit dem Wischblatt verbunden ist, und an dem ein Verbinder befestigt ist, der die Lagerzapfen trägt.

Dokument DE202005021307U offenbart eine Anschlussvorrichtung nach dem Oberbegriff des Anspruchs 1.

### Offenbarung der Erfindung

Nach der Erfindung weist die Anschlussvorrichtung relativ zur primären Gelenkachse zum freien Ende hin versetzt eine sekundäre Gelenkachse auf, die sich in einem begrenzten Bereich um die primäre Gelenkachse bewegen kann und sich in ihren Endlagen am Anschlusselement abstützt. Wenn sich die sekundäre Gelenkachse in einer unteren, dem Wischblatt zugewandten Endlage befindet, bewegt sich die primäre Gelenkachse aus einer offenen Nabe des Anschlusselements. Im Vergleich zu einer Anschlussvorrichtung mit nur einer Gelenkachse kann die Bauhöhe der Anschlussvorrichtung mit einem relativ langen Adapter niedrig sein.

Gemäß einer Ausgestaltung der Erfindung besitzt das Anschlusselement in Längsrichtung des Wischblatts verlaufende Seitenwände, die durch eine Frontwand und eine Rückwand miteinander verbunden sind. Dabei sind etwa in der Mitte der Längserstreckung der Seitenwände Naben vorgesehen, die zu der vom Wischblatt abgewandten Seite offen sind und in die primäre Gelenkzapfen des Adapters eingreifen, die die primäre Gelenkachse bilden. An den Innenseiten der Seitenwände des Anschlusselements sind in der Nähe der Frontwand einander gegenüberliegende Führungsnuten eingearbeitet, in die sekundäre Gelenkzapfen des Adapters eingreifen, die die sekundäre Gelenkachse bilden. Die Führungsnuten verlaufen gekrümmt, wobei der Mittelpunkt der Krümmung auf der primären Gelenkachse liegt. Die zwei Gelenkachsen erlauben eine Stellung des Wischarms zur Oberkante des Anschlusselements bzw. des Wischblatts unter einem negativen Winkel α bis hin zu einem positiven Winkel α. Hierzu besitzt das Anschlusselement in seiner Rückwand eine Aussparung für den Wischarm.

Ferner weist gemäß einer weiteren Ausgestaltung der Adapter Seitenwände auf, die durch einen Boden miteinander verbunden sind und zwischen sich einen Raum zur Aufnahme des Wischarms bilden, während an ihren Außenseiten die primären Gelenkzapfen und die sekundären Gelenkzapfen angeformt sind. Der Adapter wird zweckmäßigerweise in einem Spritzgussverfahren aus Kunststoff hergestellt. Bei einer Ausgestaltung ist eine zweite Seitenwand des Adapters zum Wischarm hin über eine erste Seitenwand und den Boden verlängert. Sie besitzt an dem verlängerten Ende eine Lasche, die in der Ebene des Bodens verläuft und mit diesem eine Lücke für die Rückwand des Anschlusselements bildet.

Zur Verbindung des Adapters mit dem Wischarm besitzt der Adapter an den Innenseiten seiner Seitenwände Längsnuten, die an den zum Wischarm weisenden Enden offen sind und jeweils entweder mindestens einen Führungszapfen oder einen Rastzapfen des Wischarms aufnehmen können. Da der Führungszapfen zweckmäßigerweise in der Nähe des freien Endes des Wischarms seitlich angeformt ist, während der Rastzapfen auf der anderen Längsseite zum antriebsseitigen Ende versetzt angeordnet ist, ist die Längsnut für den Führungszapfen länger als die Längsnut für den Rastzapfen. Am inneren Ende der Längsnut für den Rastzapfen befindet sich ein Rastloch, in das der Rastzapfen bei der Montage einrastet. Hierzu weicht die Seitenwand mit dem Rastloch vorübergehend elastisch nach außen aus. Um die Nachgiebigkeit der Seitenwand zu verbessern, befindet sich zwischen dem Boden und der Seitenwand im Bereich des Rastlochs ein Freistich. Über die Lasche am verlängerten Ende der Seitenwand kann der Rastzapfen bei der Demontage des Wischarms leicht außer Eingriff gebracht werden, sodass das Wischblatt in einfacher Weise vom Wischarm gelöst werden kann. Zur Vereinfachung der Montage ist in Montagerichtung vor dem Rastloch an der Innenseite der Längsnut eine Schräge vorgesehen.

Die Anschlussvorrichtung ist für Wischarme gedacht, deren freies Ende aus einem Stangenprofil mit einem rechteckigen Querschnitt gefertigt ist. Dabei kann die breite Seite des Rechtecks senkrecht zu den Schwenkachsen oder parallel zu diesen verlaufen. Im zweiten Fall ist es zweckmäßig, dass der Boden des Anschlusselements eine in Längsrichtung verlaufende Führungsrippe aufweist, die in montiertem Zustand in einen Führungsschlitz des Adapters passt. Ferner ist es vorteilhaft, dass der Boden an der dem Wischblatt abgewandten Seite eine Rastnase aufweist, die in eine entsprechende Rastvertiefung des Wischarms passt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: vier Seitenansichten einer erfindungsgemäßen Anschlussvorrichtung mit unterschiedlichen Stellungen eines Wischarms,
- Fig. 2: eine perspektivische Ansicht eines Adapters,
- Fig. 3: eine Ansicht des Adapters in Richtung eines Pfeils III in Fig. 2,

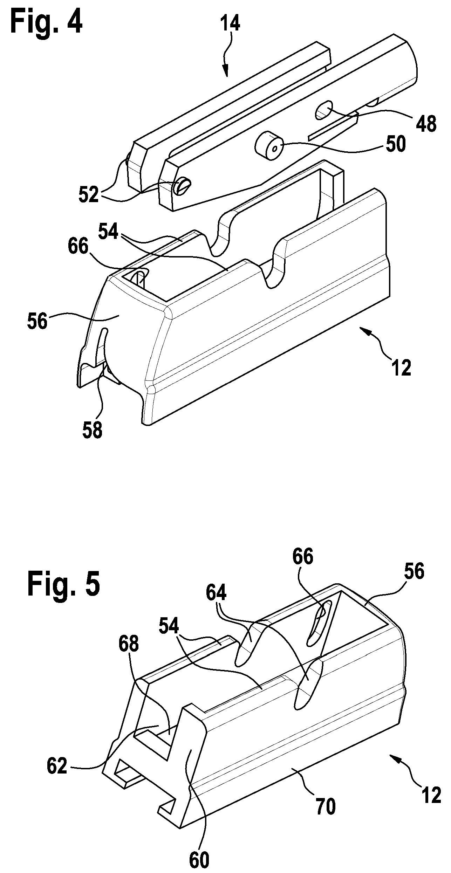

- Fig. 4: eine perspektivische Ansicht einer Anschlussvorrichtung bei einer Montage des Adapters,
- Fig. 5: eine perspektivische Ansicht eines Anschlusselements vom antriebseitigen Ende,
- Fig. 6: eine perspektivische Teilansicht eines Wischblatts mit einer montierten Anschlussvorrichtung und mit einem Wischarm,
- Fig. 7: einen perspektivischen Schnitt entsprechend der Ebene VII in Fig. 6,
- Fig. 8: eine perspektivische Ansicht einer Variante eines Anschlusselements nach Fig. 4,
- Fig. 9: eine Variante eines Adapters nach Fig. 2,
- Fig. 10: eine Variante zu Fig. 6 und
- Fig. 11: eine perspektivische Ansicht eines Endes eines Wischarms nach Fig. 10.

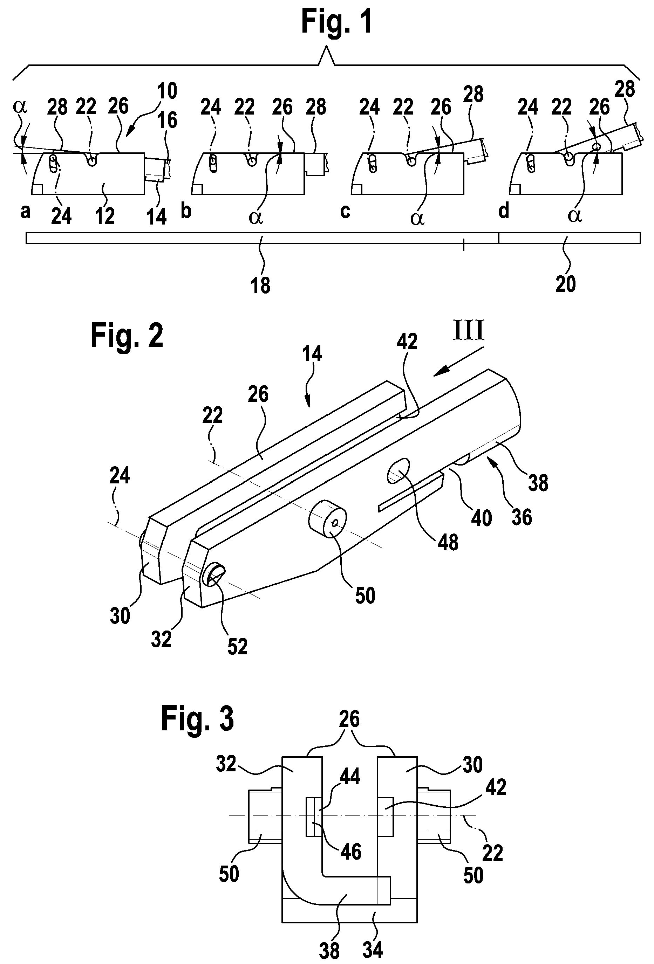

Fig. 1 zeigt vier Positionen a, b, c und d einer Anschlussvorrichtung 10, von denen die ersten drei a, b und c einen Betriebsbereich 18 kennzeichnen, während die Position d einen Montagebereich 20 darstellt. In dem Betriebsbereich 18 kann sich ein Winkel α zwischen einer Oberkante 26 eines Anschlusselements 12 und einer Oberkante 28 eines Adapters 14 zwischen einem Winkel α von ungefähr minus 5 Grad bis plus 12 Grad ändern, während der Montagebereich 20 einen größeren Winkel α zulässt.

Die Anschlussvorrichtung 10 umfasst das Anschlusselement 12 und den Adapter 14, der an einem Wischarm 16 befestigt ist. Der Adapter 14 besitzt eine erste Seitenwand 30 und eine zweite Seitenwand 32, die über einen Boden 34 miteinander verbunden sind. An den Außenseiten der Seitenwände 30, 32 sind primäre Gelenkzapfen 50 angeformt, die eine primäre Gelenkachse 22 bilden. Die Gelenkzapfen 50 greifen in Naben 64, die im mittleren Bereich der Seitenwände 54 angeordnet sind und zur Oberkante 26 des Anschlusselements 12 hin offen sind. Sie stellen im Betriebsbereich die Gelenkverbindung zwischen dem Wischblatt 72 und dem Wischarm 16 her.

An den Außenseiten der Seitenwände 30, 32 sind in Längsrichtung versetzt zu den primären Gelenkzapfen 50 zum freien Ende hin sekundäre Gelenkzapfen 52 angeformt, die in Führungsnuten 66 an den Innenseiten der Seitenwände 54 des Anschlusselements 12 eingreifen. Die Seitenwände 54 sind durch eine Frontwand 56 und eine Rückwand 60 sowie einen Boden 68 miteinander verbunden.

Die Führungsnuten 66 befinden sich in der Nähe der Frontwand 56 und sind so gekrümmt, dass ihre Krümmungsmittelpunkte auf der primären Gelenkachse 22 liegen. Somit können sich die sekundären Gelenkzapfen 52 im Betriebsbereich 18 in den Führungsnuten 66 frei bewegen, wenn die sekundären Gelenkzapfen 52 das obere Ende der Führungsnut 66 erreichen. Entsprechend ist in der Position a in Fig. 1 eine weitere Drehung in den negativen Winkelbereich durch die primäre Gelenkachse 22 blockiert, während in der unteren Endlage der sekundären Gelenkachse 24 entsprechend der Position c der Betriebsbereich endet und bei einer weiteren Drehung der Montagebereich 20 beginnt, indem sich die primäre Gelenkachse 22 aus der offenen Nabe 64 bewegt. Dazu ist die der sekundären Gelenkachse 24 zugewandte Flanke der offenen Nabe 64 entsprechend einem Kreis um die sekundäre Gelenkachse 24 gestaltet.

In der Frontwand 56 ist ein Anschlussprofil 58 vorgesehen, in dem das Anschlusselement 12 ein angrenzendes Spoilerteil 74 des Wischblatts 72 überdeckt. In der gegenüberliegenden Rückwand 60 befindet sich eine Aussparung 62 für einen Wischarm 16. Unterhalb des Bodens 68, zum Wischblatt 72 hin besitzt das Anschlusselement 12 Führungsprofile 70, mit denen es am Wischblatt 72, insbesondere an einem nicht sichtbaren Tragelement, befestigt ist.

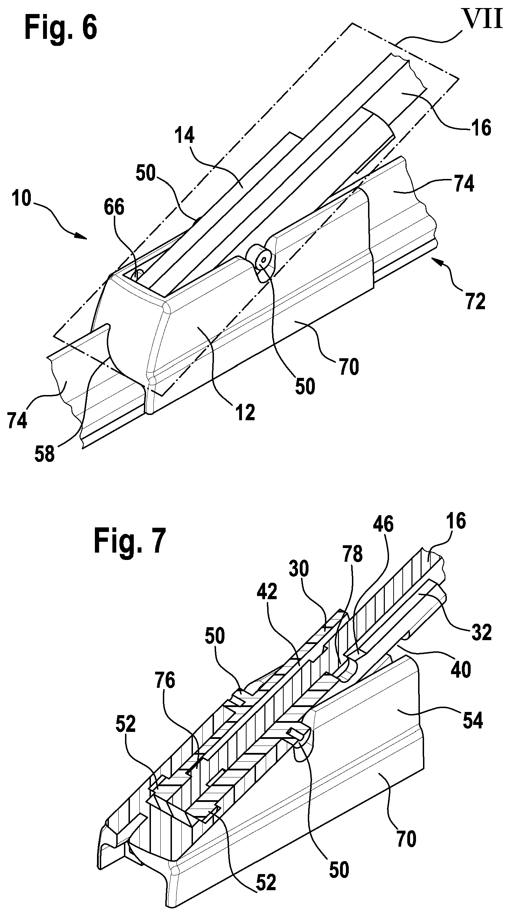

Der Raum zwischen den beiden Seitenwänden 30, 32 dient zur Aufnahme des Wischarms 16, dessen freies Ende aus einem Stangenprofil mit einem rechteckigen Querschnitt gefertigt ist. In der Ausführung nach Fig. 6 und 7 verläuft die breite Seite des rechteckigen Querschnitts senkrecht zur primären Gelenkachse 22. An einer Längsseite ist in der Nähe des freien Endes des Wischarms 16 ein Führungszapfen 76 spanlos durch Pressen angeformt, während auf der anderen Längsseite zur Antriebsseite des Wischarms 16 versetzt ein Rastzapfen 78 entsprechend angeformt ist. Der Führungszapfen 76 und der Rastzapfen 78 greifen in entsprechende Längsnuten 42, 44 des Adapters 14, wobei die Längsnut 42 entsprechend dem Versatz zum Führungszapfen 76 kürzer sein kann.

Am Ende der Längsnut 44 befindet sich ein Rastloch 48, vor dem in Montagerichtung eine Schräge 46 zur Montageerleichterung vorgesehen ist. Bei der Montage wird die zweite Seitenwand 32 vorübergehend nach außen elastisch aufgebogen. Um die Nachgiebigkeit der Seitenwand 32 zu verbessern, ist zwischen dem Boden 68 und der zweiten Seitenwand 32 im Bereich des Rastlochs 48 ein Freistich 49 vorgesehen. Die zweite Seitenwand 32 ist zum antriebsseitigen Ende des Wischarms 16 gegenüber der ersten Seitenwand 30 und dem Boden 68 verlängert. Sie besitzt an diesem Ende 36 eine Lasche 38, die in die Ebene des Bodens 68 gebogen ist und mit dem Boden 68 eine Lücke 40 bildet. In dieser Lücke 40 findet ein Teil der Rückwand 60 Platz, wenn sich die Anschlussvorrichtung 10 in einer Betriebsposition a bis c (Fig. 1) befindet. Zur Demontage kann die zweite Seitenwand 32 im Montagebereich nach außen gedrückt werden, sodass der Rastzapfen 78 freigegeben wird.

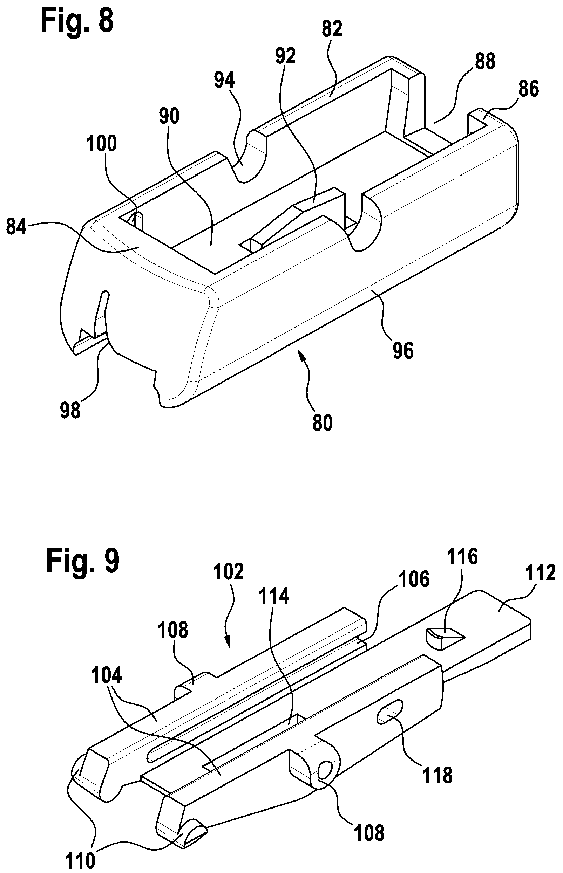

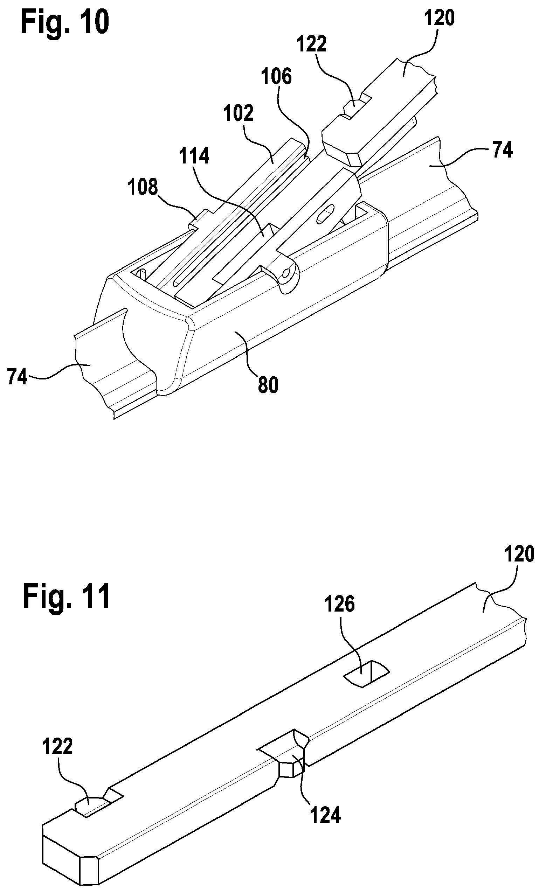

Die Ausführung der Anschlussvorrichtung 10 nach Fig. 8 bis 10 eignet sich für einen Wischarm 120 (Fig. 11), dessen freies Ende ebenfalls aus einem Profilstrang mit rechteckigen Querschnitt gefertigt ist, bei dem jedoch die lange Seite des Rechtecks parallel zur primären Gelenkachse 22 verläuft. Dadurch kann die Höhe des Anschlusselements 80 und des Adapters 102 bei im Wesentlichen gleicher Länge noch niedriger gehalten werden. Die Funktion dieser Anschlussvorrichtung 10 entspricht im Wesentlichen der Funktion der bereits vorher beschriebenen. Das Anschlusselement 80 besitzt Seitenwände 82, die im mittleren Bereich offene Naben 94 aufweisen und über eine Frontwand 84 mit einem Anschlussprofil 98 und einer Rückwand 86 mit einer Aussparung 88 sowie einem Boden 90 miteinander verbunden sind. An die Seitenwände 82 schließen sich zum Wischblatt hin Führungsprofile 96 an, mit denen das Anschlusselement 80 am Wischblatt 72 befestigt ist.

In der Nähe der Frontwand 82 befinden sich an den Innenseiten der Seitenwände 82 gekrümmte Führungsnuten 100, deren Krümmungsmittelpunkte auf der primären Gelenkachse 22 liegen. Die primäre Gelenkachse 22 wird von primären Gelenkzapfen 108 des Adapters 102 gebildet. Sie liegen an den Außenseiten von Seitenwänden 104 des Adapters 102. An diesen sind sekundäre Gelenkzapfen 110 angeformt, die in die Führungsnuten 100 des Anschlusselements 80 eingreifen. Die Seitenwände 104 des Adapters 102 sind durch einen Boden 112 miteinander verbunden. Dieser steht zum antriebsseitigen Ende hin ein Stück weit über die Seitenwände 104 vor und besitzt an der zum Wischarm 120 weisenden Seite eine Rastnase 116, die in montiertem Zustand in ein Rastloch 126 des Wischarms 120 einrastet. An den Innenseiten der Seitenwände 104 des Adapters 102 befinden sich Längsnuten 106, von denen eine einen Führungszapfen 122 und die andere einen Rastzapfen 124 des Wischarms 120 aufnimmt. Zur Montageerleichterung sind der Führungszapfen 122 und der Rastzapfen 124 in der Montage- und Demontagerichtung angeschrägt. In der Längsnut 106 für den Rastzapfen 124 ist ein Rastloch 118 vorgesehen, in das der Rastzapfen 124 bei der Montage einrastet.

Zur besseren Seitenführung besitzt das Anschlusselement 80 an der Innenseite seines Bodens 112 eine Führungsrippe 92, die in Längsrichtung verläuft und in einen entsprechenden Führungsschlitz 114 des Adapters 102 eingreift.

## Patentansprüche

1. Anschlussvorrichtung (10) zum gelenkigen Verbinden eines Wischblatts (72) in Flachbalkenbauweise mit einem Wischarm (16, 120), die ein am Wischblatt (72) zu befestigendes Anschlusselement (12, 80) und einen am Wischarm (16, 120) zu befestigenden Adapter (14, 102) umfasst, der um eine primäre Gelenkachse (22) schwenkbar mit dem Anschlusselement (12, 80) verbunden ist, **dadurch gekennzeichnet, dass** sie relativ zur primären Gelenkachse (22) zum freien Ende hin versetzt eine sekundäre Gelenkachse (24) aufweist, die sich in einem begrenzten Bereich um die primäre Gelenkachse (22) bewegen kann und sich in ihren Endlagen am Anschlusselement (12, 80) abstützt, wobei sich die primäre Gelenkachse (22) aus einer offenen Nabe (64, 94) des Anschlusselements (12, 80) bewegt, wenn sich die sekundäre Gelenkachse (24) in einer unteren, dem Wischblatt (72) zugewandten Endlage befindet.

2. Anschlussvorrichtung (10) nach Anspruch 1, **dadurch gekennzeichnet, dass** das Anschlusselement (12, 80) in Längsrichtung des Wischblatts (72) verlaufende Seitenwände (54, 82) besitzt, die durch eine Frontwand (56, 84) und eine Rückwand (60, 86) miteinander verbunden sind, wobei etwa in der Mitte der Längserstreckung der Seitenwände (54, 82) die offenen Naben (64, 94) vorgesehen sind, in die primäre Gelenkzapfen (50, 108) des Adapters (14, 102) eingreifen, die die primäre Gelenkachse (22) bilden, während an den Innenseiten der Seitenwände (54, 82) des Anschlusselements (12, 80) in der Nähe der Frontwand (56, 84) einander gegenüberliegende Führungsnuten (66, 100) eingearbeitet sind, in die sekundäre Gelenkzapfen (52, 110) des Adapters (14, 102) eingreifen.

3. Anschlussvorrichtung (10) nach Anspruch 1 oder 2, **dadurch gekennzeichnet, dass** das Anschlusselement (12, 80) in seiner Rückwand (60, 86) eine Aussparung (62, 88) für den Wischarm (16, 120) besitzt.

4. Anschlussvorrichtung (10) nach einem der vorhergehenden Ansprüche, **dadurch gekennzeichnet, dass** der Adapter (14) Seitenwände (30, 32; bzw. 104) aufweist, die durch einen Boden (34, 90) miteinander verbunden sind und zwischen sich einen Raum zur Aufnahme des Wischarms (16, 120) bilden, während an ihren Außenseiten die primären Gelenkzapfen (50) und die sekundären Gelenkzapfen (52) angeformt sind.

5. Anschlussvorrichtung (10) nach Anspruch 4, **dadurch gekennzeichnet, dass** eine zweite Seitenwand (32) des Adapters (14) zum Wischarm (16) hin über eine erste Seitenwand (30) und den Boden (34) verlängert ist und an dem Ende (36) eine Lasche (38) besitzt, die in der Ebene des Bodens (34) verläuft und mit diesem eine Lücke (40) für die Rückwand (60) des Anschlusselements (12) bildet.

6. Anschlussvorrichtung (10) nach einem der vorhergehenden Ansprüche, **dadurch gekennzeichnet, dass** an den Innenseiten der Seitenwände (30, 32, 104) des Adapters (14, 102) Längsnuten (42, 44, 106) vorgesehen sind, die an den zum Wischarm (16, 120) weisenden Enden offen sind und jeweils entweder mindestens einen Führungszapfen (76, 122) oder einen Rastzapfen (78, 124) des Wischarms (16, 120) aufnehmen können, wobei am inneren Ende der Längsnut (44, 106) für den Rastzapfen (78, 124) ein Rastloch (48, 118) für den Rastzapfen (78, 124) angeordnet ist.

7. Anschlussvorrichtung (10) nach Anspruch 6, **dadurch gekennzeichnet, dass** in Montagerichtung vor dem Rastloch (48, 118) eine Schräge (46) vorgesehen ist.

8. Anschlussvorrichtung (10) nach Anspruch 7, **dadurch gekennzeichnet, dass** im Bereich des Rastlochs (48) zwischen dem Boden (34) und der zweiten Seitenwand (32) ein Freistich (49) vorgesehen ist.

9. Anschlussvorrichtung (10) nach einem der vorhergehenden Ansprüche, **dadurch gekennzeichnet, dass** an dem Boden (90) des Anschlusselements (80) eine in Längsrichtung verlaufende Führungsrippe (92) angeformt ist, die im montierten Zustand in einen Führungsschlitz (114) des Adapters (102) passt.

10. Anschlussvorrichtung (10) nach einem der vorhergehenden Ansprüche, **dadurch gekennzeichnet, dass** der Boden (34, 112) des Adapters an der dem Wischblatt (72) abgewandten Seite eine Rastnase (116) aufweist, die in eine entsprechende Rastvertiefung (126) des Wischarms (120) passt.

## Claims

1. Connection device (10) for the articulated connection of a wiper blade (72) in flat bar construction to a wiper arm (16, 120), which connection device comprises a connection element (12, 80) to be fastened to the wiper blade (72) and an adapter (14, 102) which is to be fastened to the wiper arm (16, 120) and is connected to the connection element (12, 80) so as to be pivotable about a primary axis of articulation (22), **characterized in that** said connection device has, offset towards the free end relative to the primary axis of articulation (22), a secondary axis of articulation (24) which can move in a limited range about the primary axis of articulation (22) and is supported in its end regions on the connection element (12, 80), wherein the primary axis of articulation (22) moves out of an open hub (64, 94) of the connection element (12, 80) when the secondary axis of articulation (24) is in a lower end position facing the wiper blade (72).

2. Connection device (10) according to Claim 1, **characterized in that** the connection element (12, 80) has side walls (54, 82) which run in the longitudinal direction of the wiper blade (72) and are connected to each other by a front wall (56, 84) and a rear wall (60, 86), wherein the open hubs (64, 94), in which primary pivot pins (50, 108) of the adapter (14, 102), which form the primary axis of articulation (22), engage, are provided approximately in the centre of the longitudinal extent of the side walls (54, 82), while mutually opposite guide grooves (66, 100), in which secondary pivot pins (52, 110) of the adapter (14, 102) engage, are incorporated on the inner sides of the side walls (54, 82) of the connection element (12, 80) in the vicinity of the front wall (56, 84).

3. Connection device (10) according to Claim 1 or 2, **characterized in that** the connection element (12, 80) has a recess in its rear wall (60, 86) (62, 88) for the wiper arm (16, 120).

4. Connection device (10) according to one of the preceding claims, **characterized in that** the adapter (14) has side walls (30, 32; or 104) which are connected to each other by a base (34, 90) and form a space in between for receiving the wiper arm (16, 120) while the primary pivot pins (50) and the secondary pivot pins (52) are integrally formed on the outer sides thereof.

5. Connection device (10) according to Claim 4, **characterized in that** a second side wall (32) of the adapter (14) is extended over a first side wall (30) and the base (34) towards the wiper arm (16) and, at the end (36), has a tab (38) which runs in the plane of the base (34) and forms a gap (40) with the latter for the rear wall (60) of the connection element (12).

6. Connection device (10) according to one of the preceding claims, **characterized in that** longitudinal grooves (42, 44, 106) are provided on the inner sides of the side walls (30, 32, 104) of the adapter (14, 102), said longitudinal grooves being open at the ends pointing towards the wiper arm (16, 120) and each being able to receive either at least one guide pin (76, 122) or a latching pin (78, 124) of the wiper arm (16, 120), wherein a latching hole (48, 118) for the latching pin (78, 124) is arranged on the inner end of the longitudinal groove (44, 106) for the latching pin (78, 124).

7. Connection device (10) according to Claim 6, **characterized in that** a slope (46) is provided upstream of the latching hole (48, 118) in the installation direction.

8. Connection device (10) according to Claim 7, **characterized in that** an undercut (49) is provided in the region of the latching hole (48) between the base (34) and the second side wall (32).

9. Connection device (10) according to one of the preceding claims, **characterized in that** a guide rib (92) which runs in the longitudinal direction and, in the mounted state, fits into a guide slot (114) of the adapter (102) is integrally formed on the base (90) of the connection element (80).

10. Connection device (10) according to one of the preceding claims, **characterized in that** the base (34, 112) of the adapter has, on the side facing away from the wiper blade (72), a latching lug (116) which fits into a corresponding latching depression (126) of the wiper arm (120).

## Revendications

1. Dispositif de raccordement (10) pour la liaison articulée d'un balai d'essuie-glace (72) de construction sous forme de poutre plate à un bras d'essuie-glace (16, 102), qui comprend un élément de raccordement (12, 80) devant être fixé au balai d'essuie-glace (72) et un adaptateur (14, 102) devant être fixé au bras d'essuie-glace (16, 120), qui est connecté à l'élément de raccordement (12, 80) de manière à pouvoir pivoter autour d'un axe d'articulation principal (22), **caractérisé en ce qu'**il présente un axe d'articulation secondaire (24) décalé vers l'extrémité libre par rapport à l'axe d'articulation principal (22) et qui peut se déplacer dans une plage limitée autour de l'axe d'articulation principal (22) et s'appuie dans ses positions extrêmes contre l'élément de raccordement (12, 80), l'axe d'articulation principal (22) se déplaçant depuis un moyeu ouvert (64, 94) de l'élément de raccordement (12, 80) lorsque l'axe d'articulation secondaire (24) se trouve dans une position extrême inférieure, tournée vers le balai d'essuie-glace (72).

2. Dispositif de raccordement (10) selon la revendication 1, **caractérisé en ce que** l'élément de raccordement (12, 80) possède des parois latérales (54, 82) s'étendant dans la direction longitudinale du balai d'essuie-glace (72), lesquelles sont connectées l'une à l'autre par une paroi avant (56, 84) et une paroi arrière (60, 86), les moyeux ouverts (64, 94) étant prévus approximativement au milieu de l'étendue longitudinale des parois latérales (54, 82), dans lesquels moyeux s'engagent des tourillons d'articulation principaux (50, 108) de l'adaptateur (14, 102) qui forment l'axe d'articulation principal (22), tandis que des rainures de guidage mutuellement opposées (66, 100) sont réalisées au niveau des côtés intérieurs des parois latérales (54, 82) de l'élément de raccordement (12, 80) à proximité de la paroi avant (56, 84), dans lesquelles rainures de guidage s'engagent les tourillons d'articulation secondaires (52, 110) de l'adaptateur (14, 102).

3. Dispositif de raccordement (10) selon la revendication 1 ou 2, **caractérisé en ce que** l'élément de raccordement (12, 80) possède, dans sa paroi arrière (60, 86), un évidement (62, 88) pour le bras d'essuie-glace (16, 120).

4. Dispositif de raccordement (10) selon l'une quelconque des revendications précédentes, **caractérisé en ce que** l'adaptateur (14) présente des parois latérales (30, 32 ; respectivement 104), qui sont connectées les unes aux autres par un fond (34, 90) et qui forment entre elles un espace pour recevoir le bras d'essuie-glace (16, 120), tandis que les tourillons d'articulation principaux (50) et les tourillons d'articulation secondaires (52) sont façonnés au niveau de leurs côtés extérieurs.

5. Dispositif de raccordement (10) selon la revendication 4, **caractérisé en ce qu'**une deuxième paroi latérale (32) de l'adaptateur (14) est prolongée vers le bras d'essuie-glace (16) au-delà d'une première paroi latérale (30) et du fond (34) et possède, au niveau de l'extrémité (36), une patte (38) qui s'étend dans le plan du fond (34) et qui forme avec celui-ci un espace vide (40) pour la paroi arrière (60) de l'élément de raccordement (12).

6. Dispositif de raccordement (10) selon l'une quelconque des revendications précédentes, **caractérisé en ce que** des rainures longitudinales (42, 44, 106) sont prévues au niveau des côtés intérieurs des parois latérales (30, 32, 104) de l'adaptateur (14, 102), lesquelles sont ouvertes au niveau des extrémités tournées vers le bras d'essuie-glace (16, 120) et peuvent recevoir à chaque fois soit au moins un tourillon de guidage (76, 122), soit un tourillon d'encliquetage (78, 124) du bras d'essuie-glace (16, 120), un trou d'encliquetage (48, 118) pour le tourillon d'encliquetage (78, 124) étant disposé au niveau de l'extrémité intérieure de la rainure longitudinale (44, 106) pour le tourillon d'encliquetage (78, 124).

7. Dispositif de raccordement (10) selon la revendication 6, **caractérisé en ce qu'**un biseau (46) est prévu dans la direction de montage avant le trou d'encliquetage (48, 118).

8. Dispositif de raccordement (10) selon la revendication 7, **caractérisé en ce que** dans la région du trou d'encliquetage (48) entre le fond (34) et la deuxième paroi latérale (32) est prévu un dégagement par rainure (49).

9. Dispositif de raccordement (10) selon l'une quelconque des revendications précédentes, **caractérisé en ce qu'**une rainure de guidage (92) s'étendant dans la direction longitudinale est façonnée au niveau du fond (90) de l'élément de raccordement (80), laquelle, dans l'état monté, s'adapte dans une fente de guidage (114) de l'adaptateur (102).

10. Dispositif de raccordement (10) selon l'une quelconque des revendications précédentes, **caractérisé en ce que** le fond (34, 112) de l'adaptateur présente, au niveau du côté opposé au balai d'essuie-glace (72), un ergot d'encliquetage (116) qui s'adapte dans un renfoncement d'encliquetage correspondant (126) du bras d'essuie-glace (120).
